# EUROPEAN PATENT APPLICATION

(11) **EP 2 487 298 A1**
(43) Date of publication of application: **15.08.2012**
(21) Application number: 11154187.6
(22) Date of filing: 11.02.2011
(51) Int. Cl.: E02F 3/40, E02F 3/407, E02F 3/60, E02F 9/22, B09B 1/00

(54) **A contamination cover apparatus for a work machine**

(71) Applicant: Caterpillar Work Tools B. V., 5232 BJ 's-Hertogenbosch (NL)
(72) Inventor: Luyendijk, Dirk Jacobus, 5473 RE, Heeswijk-Dinther (NL)
(74) Representative: Modiano, Micaela Nadia

(57) **Abstract**

A contamination cover apparatus (10) for a worktool comprising a cover (12) moveable between an open position and a closed position; a rotatable arm (14) for actuating the cover between the open and closed positions; and a link member (16) coupling the arm to the cover for transforming the rotational movement of the arm (14) to the opening movement of the cover (12).

## Description

### Technical Field

This disclosure relates to a device and a method for preventing contamination of fluid connector components that couple a worktool to a machine, particularly to a cover for the fluid connector components.

### Background

Worktools, such as shears, grabs, or buckets may be coupled with host machines, such as excavators, to perform work operations like cutting, grabbing or excavating. The worktools may be coupled to a boom or stick mechanism of the host machine via a fixed connection or a quick release connection.

A quick release connection may allow for a relatively easy exchange of the worktool whereby the operator connects or changes a worktool without leaving the cab. The machine mounting bracket is arranged to slide into the worktool mounting bracket, when the worktool is positioned on the ground. After aligning the mounting bracket of the worktool and the mounting bracket of the machine, a locking device may be moved into a locked position to lock the worktool to the machine.

The worktool that may be unused during a specific operation may be subject to external elements such as moisture and dust or other contaminants which may settle on the fluidconnectors of the hydraulic lines. Such contamination may damage the fluidconnectors of the worktool or the machine during a coupling procedure or may result in impeding the coupling of the machine mounting bracket and the worktool mounting bracket.

WO199927194 discloses a device for protecting connection elements on construction equipment from grime, dust and water. The connection elements may serve to connect lines for liquid and gaseous mediums or for electric cables. A covering arrangement may protect the connection elements. The covering arrangement may comprise a tubular and movable envelope provided with openings which cover or expose the connection elements through rotation of the envelope around the connection elements. The envelope may be provided on the worktool bracket or the machine bracket and may be rotated by actuation of a lever connected thereto.

The present disclosure is directed, at least in part, to improving or overcoming one or more aspects of the prior art system.

### Brief Summary of the Invention

In a first aspect, the present disclosure describes a contamination cover apparatus for a worktool comprising a cover moveable between an open position and a closed position; a rotatable arm for actuating the cover between the open and closed positions; and a link member coupling the arm to the cover for transforming the rotational movement of the arm to the opening movement of the cover.

In a second aspect, the present disclosure describes a method of actuating a contamination cover apparatus for a worktool, comprising the steps of arranging a cover to be moveable between an open position and a closed position; and rotating an arm for actuating the cover between the open and closed positions, wherein the arm is coupled to the cover through a link member for transforming the rotational movement of the arm to the opening movement of the cover.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is an isometric side view of a contamination cover apparatus according to the present disclosure;
Fig. 2 is an isometric rear view of a contamination cover apparatus according to the present disclosure;
Fig. 3 is a side view of a contamination cover apparatus in the closed position according to the present disclosure; and
Fig. 4 is a side view of a contamination cover apparatus in the open position according to the present disclosure.

### Detailed Description

This disclosure generally relates to a contamination cover apparatus **10** for preventing contamination of fluidconnectors. The fluidconnectors may be disposed in a worktool.

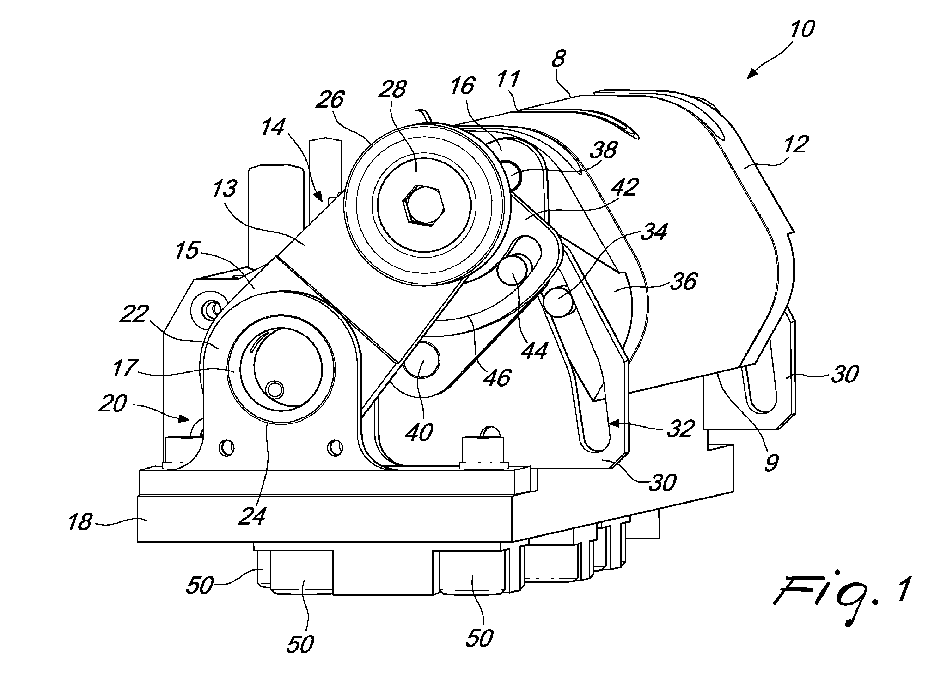

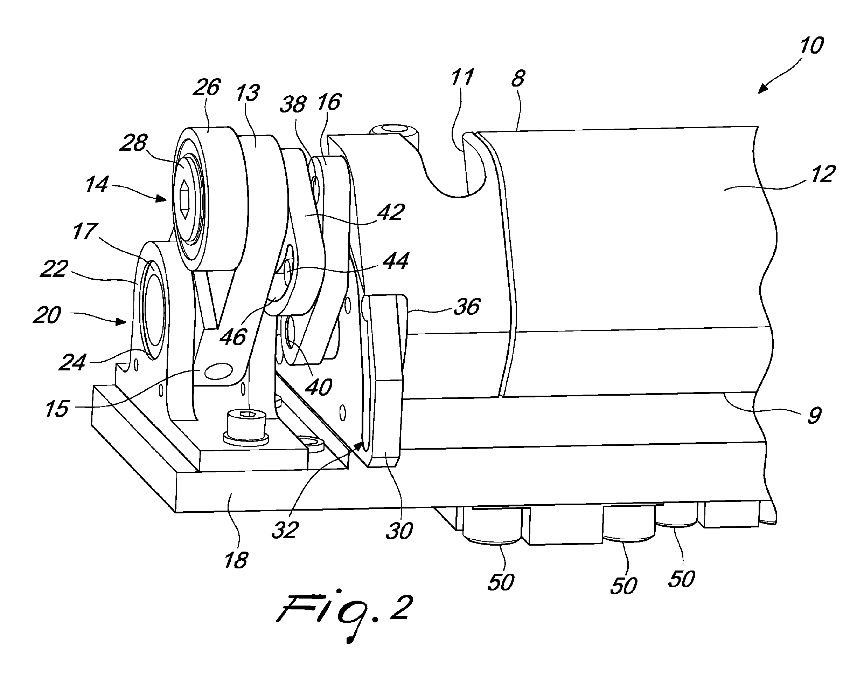

Fig. 1 and Fig. 2 illustrate a contamination cover apparatus **10** for a worktool. The contamination cover apparatus **10** may comprise a cover **12,** an arm **14** and a link member **16.** The contamination cover apparatus **10** may further comprise a mounting base **18.** The mounting base **18** may be a panel for mounting to a mounting bracket, such as a work tool mounting bracket. Fluidconnectors **50** may be arranged in the mounting base **18.**

The cover **12** may be moveable between an open position and a closed position. In the closed position the cover **12** may extend over the fluidconnectors **50** for shielding from contaminants. At the open position of the cover **12** the fluidconnectors **50** may be uncovered and may be available for connection to corresponding fluidconnectors disposed in a machine. The cover **12** may have a front edge **8** that passes over the fluidconnectors **50** as the cover **12** moves between the open or closed positions. The cover **12** may have a rear edge **9** opposite to the front edge **8.** The rear edge **9** may pass over the mounting base **18** as the cover **12** moves between the open or closed positions. The front edge **8** and the rear edge **9** may be formed so that as the cover **12** transits between the open or closed positions the edges **8, 9** are not obstructed. The transition path of cover **12** may be suitably provided so that during transition between the open or closed positions the edges **8, 9** are not obstructed.

The cover **12** may be suitably mounted in the contamination cover apparatus **10** to be moveable between an open position and a closed position.

The cover **12** may be suitably shaped to adequately cover the fluidconnectors in the closed position and to move between the open and closed positions so that the edges **8, 9** there of avoid contacting the fluidconnectors. In an embodiment, the cover **12** may have an arcuate shaped which may have a height greater than the length of the fluid connectors.

The cover **12** may be provided with a channel **11** to accommodate components other than the fluidconnectors **50.** For example, the component may be a guiding pin.

The arm **14** may be arranged to actuate the cover **12** between the open and closed positions. The arm **14** may be arranged to be rotatable about an end. The rotation of the arm **14** may effect a movement of the cover **12** between the open and closed positions.

The arm **14** may be elongated and may have a longitudinal axis. The arm **14** may comprise an abutment portion **13** and a mounting portion **15.** The mounting portion **15** may be thicker relative to the abutment portion. The width of the arm **14** may vary along the longitudinal axis. In an embodiment, the width of the arm **14** may decrease from the mounting portion **15** to the abutment portion **13.**

In an embodiment, the mounting portion **15** may be rotatably mounted to a mounting member **20.** The mounting portion **15** of the arm **14** may comprise a pin **17** for engaging the mounting member **20.** The pin **17** may extend from the mounting portion **15** transverse to the longitudinal axis of the arm **14.**

The mounting member **20** may be a clevis and the mounting portion **15** may be positioned between upright portions **22** of the clevis. The pin **17** of arm **14** may engage into a corresponding opening **24** in the upright portion **22** of the mounting member **20.** The pin **17** may be rotabably engaged in the opening **24** to enable the arm **14** to rotate about the engagement of the pin **17** and the opening **24.**

In an embodiment, the mounting portion **15** may be rotatably mounted to the mounting base **18.** The pin **17** extending from the mounting portion **15** may be rotabably engaged to mounting base **18** to enable the arm **14** to rotate about a mounting point of the mounting portion **15** to the mounting base **18.**

In an embodiment, the mounting portion **15** may comprise at least two pins **17** for engaging into corresponding openings **24** in the upright portions **22** of the mounting member **20.** The pins **17** may extend in opposite directions and from opposite sides of the mounting portion **15.**

The direction of rotation of arm **14** may correspond to the transition of the cover **12** between the open and closed positions. A rotational direction of arm **14** may correspond to the opening of cover **12** and the opposite rotational direction of arm **14** may correspond to the closing of cover **12.** In an embodiment, the clockwise rotation of arm **14** may correspond to the opening of cover **12.**

The magnitude of rotation of arm **14** and the magnitude of movement of cover **12** may be correlated. In an embodiment, the magnitude of rotation of arm **14** may correspond to the magnitude of movement of cover **12.** A direct connection between the arm **14** and the cover **12** may enable respective movements of a corresponding magnitude.

In an embodiment, the magnitude of rotation of arm **14** may be lesser than the magnitude of movement of cover **12.** In an embodiment, the magnitude of rotation of arm **14** may be greater than the magnitude of movement of cover **12.** An indirect connection between the arm **14** and the cover **12** may enable respective movements of non-corresponding magnitudes.

The dimension of the arm **14** may be selected with respect to the dimension of the cover **12.** In an embodiment, the abutment portion **13** of the arm **14** may extend past the cover **12.** The end of abutment portion **13** that is opposite the mounting portion **15** may transit in an arc as arm **14** rotates.

In an embodiment, during transition of the cover **12,** a portion thereof for example the front edge **8,** may not extend beyond the rotational arc of the end of abutment portion **13.** This arrangement may enable the cover **12** to transit between the open and closed positions without contacting a coupling body which engages the abutment portion **13** during a coupling procedure.

The shape of arm **14** may be selected with respect to the position and structure of the components around the arm **14** or in engagement with the arm **14.** In an embodiment, the arm **14** may be plate-like. In an embodiment, the arm **14** may be a rod.

Arm **14** may be suitably positioned relative to cover **12** to effect unobstructed opening and closing of the cover **12.** The arm **14** may be positioned lateral to the cover **12** adjacent to edges **8, 9.** In an embodiment, the arm **14** may be positioned lateral to the cover **12** such that the arc of rotation of arm **14** may be parallel to the transition path of opening and closing of cover **12.**

The arm **14** may be provided with a cam follower **26.** The cam follower **26** may abut a corresponding coupling body, such as a machine mounting bracket, during a coupling procedure. The cam follower **26** may be provided on the abutment portion **13** of the arm. The cam follower **26** may be connected laterally to the abutment portion **13** by a cam follower pin **28.** The cam follower **26** may be rotatably connected to the abutment portion **13.** In an embodiment, the cam follower **26** may be positioned on a side of the abutment portion **13** opposite to the side facing the cover **12.**

In an embodiment, during transition of cover **12,** a portion thereof for example the front edge **8,** may not extend beyond the rotational arc of the cam follower **26.** This arrangement may enable the cover **12** to transit between the open and closed positions without contacting a coupling body which engages the cam follower **26** during a coupling procedure.

The contamination cover apparatus **10** may further comprise a biasing member. The biasing member may bias the arm **14** in a rotational direction. The biasing member may act on the arm **14** to rotate in a direction that corresponds to the transition of the cover from the open position to the closed position. The biasing member may urge the arm **14** in a direction for actuating the cover to the closed position.

The biasing member may be positioned in the hollow of pin **17** of the arm **14.** The biasing member may be positioned between the wall of opening **24** and the pin **17.** The biasing member may be a torsional spring.

In an embodiment, the biasing member may be disposed between the arm **14** and the mounting base **18.** In an embodiment, the biasing member may be disposed between the arm **14** and the mounting member **20.**

The contamination cover apparatus **10** may further comprise a guide **30.** The guide **30** may be coupled to the cover **12** for guiding the transition path and rotation of the cover **12** along the transition path. The guide **30** may be mounted to the mounting base **18.** The guide **30** may be mounted to the mounting base **18** adjacent the cover **12** to guide the transition path and rotation of the cover **12.**

In an embodiment, guide **30** may support the cover **12.** The cover **12** may be floatingly supported by the guide **30** in the contamination cover apparatus **10.** The guide **30** may support the cover **12** at the open position, along the transition path and the closed position.

The guide **30** may be positioned relative to cover **12** to effect unobstructed opening and closing of the cover **12.** The guide **30** may be positioned lateral to the cover **12** adjacent to edges **8, 9.** In an embodiment, the guide **30** may be positioned lateral to the cover **12** so that the transition path of cover **12** is parallel to the arc of rotation of arm **14.**

The guide **30** may comprise a guide slot **32.** The cover **12** may be supported by the guide **30** in the guide slot **32.** The engagement of the cover **12** in the guide slot **32** may allow the guide to direct the transition path and rotation of the cover **12.**

The cover **12** may have a cover boss **34** extending from the cover **12** into the guide slot **32.** The cover boss **34** may be slidingly held in the guide slot **32.** In an embodiment, the cover boss may be a slot pin. The cover boss **34** may be rigidly fixed in the cover **12.**

In an embodiment, the guide slot **32** may be divided into sections to direct the movement of the cover **12** varying along the transition path.

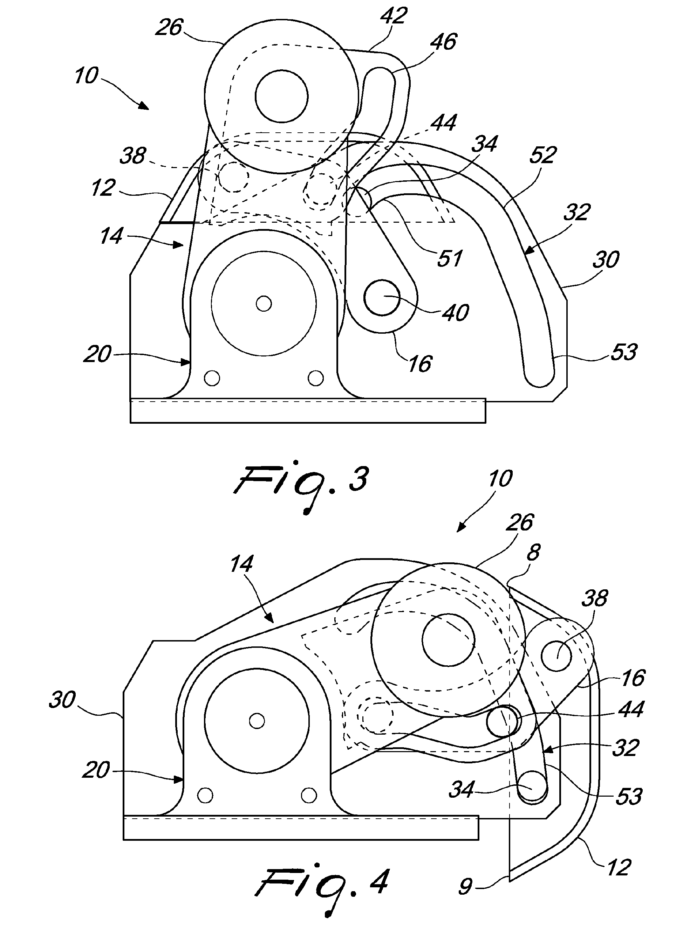

With reference to Fig. 3 and Fig. 4, the first section **51** may be positioned at the portion of the guide **30** furthest from the mounting base **18.** The second section **52** follows the first section **51** and precedes the third section **53** which is positioned at the portion of the guide **30** adjacent to the mounting base **18.** The second section **52** may be inclined relative to the first section **51** and third section **53.** In an embodiment, the first section **51** and third section **53** may be inclined from the second section **52** by the same angle of inclination.

In an embodiment, the first section **51** may be provided such that at initial movement of the cover **12,** when transiting from the closed position to the open position, the cover **12** may have a tilting movement. The cover **12** may transit so that the front edge **8** moves over the fluidconnectors **50** without contact between the front edge **8** and the fluidconnectors **50.**

In an embodiment, the first section **51** may be provided such that at initial movement of the cover **12,** when transiting from the closed position to the open position, the cover **12** may have a tilting movement. The cover **12** may transit so that the rear edge **9** moves over the mounting base **18** without contact between the rear edge **9** and the mounting base **18.**

In an embodiment, the first section **51** may be provided such that at initial movement of the cover **12,** when transiting from the closed position to the open position, the cover **12** may transit without contact with a coupling body, such as a machine bracket.

In an embodiment, the second section **52** may be provided such that cover **12,** when transiting between the closed positioned and the open position, may have a sliding movement.

In an embodiment, the third section **53** may be provided such that at final movement of the cover **12,** when transiting from the closed position to the open position the cover **12** may have a rotational movement such that the position of the front edge **8** relative to the rear edge **9** may change. The third section **53** may be defined so that the cover **12** may rotate through an angle approximately between 85° to 95°. The cover **12** may rotate through an angle of approximately 90°.

The three sections **51, 52, 53** of the guide slot **32** may direct the cover **12** along a non-circular transition path.

The transition of the cover **12** from the open position to the closed position may be effected with the cover **12** moving through the sections in the reverse order. The rotational, the sliding and the tilting movements may be effected in reverse. The transition of the cover **12** from the open position to the closed position may be effected by the biasing member action on the arm **14.**

The cover **12** may include a recess **36** at the side coupled to guide **30** through cover boss **34.** The recess **36** may accommodate the guide **30.** The shape and dimension of the recess **36** may be complementary to the guide **30** so that the movement of the cover **12** is not hindered by the free edges of the guide **30.** The guide **30** may be accommodated in the recess **36** such that the outward facing surface of the guide **12** is level to the surface of the non-recessed part of the side that borders the recess.

In an embodiment, the contamination cover apparatus **10** may further comprise a second guide **30** positioned at the opposite side of cover **12.** The guides **30** may be orientated to be mutually parallel. The cover **12** may include a second cover boss **34** to engage in a second guide slot **32** of the second guide **30.** The transition path of the cover **12** may be directed by both the guides **30.** The cover **12** may be supported by both the guides **30.**

In an embodiment, the guide **30** may be a plate-like structure.

The link member **16** may couple the arm **14** to the cover **12** for translating the rotational movement of the arm **14** to the opening movement of the cover **12.**

In an embodiment, the arm **14** may be connected to the cover **12** through a direct connection. In this embodiment, the force for the transition and rotation of cover **12** may be provided by the arm **14** through the direct connection via a link, for example by a pin. The transition path and the rotation of the cover **12** along the path may be determined by the cover boss **34** sliding along the guide slot **32.**

In an embodiment, the arm **14** may be connected to the cover **12** through an indirect connection by link member **16.** The link member **16** may be positioned between the arm **14** and the cover **12.** The link member **16** may be connected to the cover **12** and the guide **30.** The link member **16** may be connected to the surfaces of the cover **12** and the guide **30** that are level.

Link member **16** may have an end connected to the cover **12.** The link member **16** may be connected to the cover **12** through a pivotable connection. The pivotable connection may be positioned adjacent the front edge **8** of the cover **12.** In an embodiment, a pin **38** may connect the link member **16** and the cover **12.** The pin **38** may be rotatably engaged in the link member **16** and/ or in the cover **12** to allow the link member **16** to rotate relative to cover **12.** The position of pin **38** relative to the guide **30** may change as the cover **12** moves along the transition path.

As the cover **12** moves along the transition path the positions of cover boss **34** and pin **38** may change relative to the guide **30.** As the cover **12** moves along the transition path the position of cover boss **34** relative to pin **38** may change to rotate the cover **12** relative to the guide **30.**

Link member **16** may have an opposite end connected to the guide **30.** The link member **16** may be connected to the guide **30** through a pivotable connection. In an embodiment, the pivotable connection may be positioned adjacent an edge remote from the guide slot **32.** In an another embodiment, the pivotable connection may be positioned the pivotable connection may be positioned adjacent to the guide slot **32.**

In an embodiment, the pivotable connection may be a pin **40** connecting the link member **16** and the guide **30.** The pin **40** may be rotatably engaged in the link member **16** and/ or in the guide **30** to allow the link member **16** to rotate relative to guide **30.** The position of pin **40** relative to the guide **30** may be fixed. The link member **16** may rotate about the pin **40** as the link member **16** moves relative to the guide **30.**

The link member **16** may have any suitable form. In an embodiment, the link member **16** may be a flat panel.

The arm **14** may be coupled to the link member **16.** The arm **14** may be coupled to the link member **16** at a side opposite the side facing the cover **12** and the guide **30.**

In an embodiment, the arm **14** may be connected to the link member **16** through a rotatable connection that may be positioned between the pivotable connections of link member **16** at pins **38, 40.** The rotatable connection may be positioned on an apex of the link member **16** positioned between the ends thereof. The rotatable connection may be effected through a pin rotatably engaged in the arm **14** and in the link member **16.** The rotatable connection may allow the link member **16** to rotate relative to arm **14.** In this embodiment, the force for the movement of the cover **12** may be provided by the arm **14** through the indirect connection via the link member **16.** The transition path and the rotation of the cover **12** along the path may be determined by the cover boss **34** sliding along the guide slot **32.** The link member **16** may rotate about pin **40** relative to the guide **30.** The link member **16** may rotate relative to the cover **12** to enable cover **12** to move along the transition path defined by the guide slot **32.**

The arm **14** may include a flange **42** extending from the arm **14.** The flange **42** may extend in a direction transverse to the longitudinal axis of the arm **14.** The flange **42** may extend laterally from the arm **14.** The flange **42** may be interposed between the arm **14** and the link member **16.** The link member **16** may be interposed between the flange **42** and the cover **12.**

In an embodiment, the flange **42** may be integral to the arm **14.** In an embodiment, the flange **42** may be connected to the arm **14 .**

The arm **14** may be connected to the link member **16** through a coupling arrangement comprising a link boss **44** from the link member **16.**

In an embodiment, the flanged **42** may include a flange slot **46.** The flange slot **46** may be positioned between the first and second pivotably connected ends of the link member. The flange slot **46** may be extend between the pivotable connections of link member **16** at pins **38, 40.** The link boss **44** may be slidingly engaged in the flange slot **46.** The arm **14** may be rotatable relative to the link member **16.**

The rotation of the cover **12** during transition between the open and closed positions may be controlled through the engagement of the link boss **44** in the flange slot **46.** The flange slot **46** may be in a form of an arc to effect rotation of the cover **12** along the transition path.

The flange slot **46** may translate the rotational movement of the arm **14** into rotational movement of the cover **12.** In an embodiment, the flange slot **46** may be defined so that the cover **12** may rotate at a greater magnitude than the arm **14.** In an embodiment, the flange slot **46** may be defined so that the cover **12** may rotate at the same magnitude as the arm **14.**

The shape of the flange slot **46** may determine the speed of rotation of the cover **12.** A straight slot may enable the cover **12** to rotate at a constant speed. A change in the angle of the flange slot **46** may result in the speed of the cover **12** to vary during rotation. The variance in the speed of rotation may correspond to the change in the angle of the flange slot **46**

The force for the transition of the cover **12** may be provided by the arm **14** through the indirect connection via the link member **16.** The transition path of cover **12** may be determined by the cover boss **34** sliding along the guide slot **32.** The rotation of the cover **12** about pin **38** along the transition path may be controlled by the link boss **44** sliding along the flange slot **46.**

The link member **16** may rotate about pin **40** relative to the guide **30.** The link member **16** may rotate relative to the cover **12** about pin **38** to enable cover **12** to move along the transition path defined by the guide slot **32** and to enable cover **12** to rotate about pin **38.**

In an embodiment, the link boss **44** may be rotatably coupled to the link member **16.** The arm **14** may be rotatable relative to the link member **16.** The link boss **44** may be positioned between the pivotable connections of link member **16** at pins **38, 40.** The link boss **44** may be positioned on an apex of the link member **16** positioned between the ends thereof.

The method of operation of the contamination cover apparatus **10** may be described as follows.

During a coupling procedure between a worktool and a machine the cam follower **26** may engage with a coupling body, for example a machine mounting bracket. The cam follower **26** may be pushed towards the mounting base **18.** The movement of the cam follower **26** may effect a corresponding rotation of the arm **14** about the pin **17.** The rotation of arm **14** may be in a direction counter to the biasing force of the biasing member.

The rotation of arm **14** may be transferred to the cover **12** through the link member **16.** The link member **16** may be forced to rotate about pin **40** in response to the rotation of the arm **14.**

In an embodiment, the link member **16** may be forced to rotate as a result of a coupling between flange **42** and the link member **16.** The flange **42** may transmit the force of the rotating arm **14** to the link member **16.** The link member **16** may rotate about pin **40** in response to the applied force. The rotation of the link member **16** may effect a movement of the cover **12** along the transition path. The rotation of the link member **16** may effect a rotation of the cover **12.**

As the link member **16** rotates, the cover **12** may move correspondingly as a result of the connection between the link member **16** and the cover **12** at pin **38.** As the cover boss **34** slides along the guide slot **32** the cover **12** may follow the transition path as defined by the guide slot **32** from the closed position to the open position. The initial movement of the cover **12** may enable a sufficient clearance to avoid contact with the fluidconnectors.

Simultaneously, the link boss **44** may slide along the flange slot **46.** The movement of the link boss **44** along the arc shaped flange slot **46** effects a corresponding rotation of the cover **12** about pin **38.**

During uncoupling of the worktool from the machine, the cover **12** may be moved along the transition path from the open position to the closed position by action of the biasing member on the arm **14.**

The skilled person would appreciate that foregoing embodiments may be modified to obtain the contamination cover apparatus **10** of the present disclosure.

### Industrial Applicability

This disclosure describes a contamination cover apparatus **10** for preventing contamination of fluidconnectors when not connected. The fluid connectors may be disposed in a worktool.

The contamination cover apparatus **10** comprises a cover **12** positioned about the fluidconnectors when not in use. The cover **12** may be moved during a coupling procedure between a wortktool and a machine to allow engagement between corresponding fluidconnectors located on the worktool and the machine. The cover **12** may be moved along a transition path defined by the slot **32** in the guide **30.** The cover **12** may rotate by the change in the relative positions between the front edge 8 and the rear edge **9.** The cover **12** may be rotated by changing the relative positions between the pin **38** and the cover boss **34.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A contamination cover apparatus (10) for a worktool, comprising:
a cover (12) moveable between an open position and a closed position;
a rotatable arm (14) for actuating the cover (12) between the open and closed positions; and
a link member (16) coupling the arm (14) to the cover (12) for transforming the rotational movement of the arm (14) to the opening movement of the cover (12).

2. The apparatus (10) of claim 1 further comprising a biasing member to urge the arm (14) in a direction for actuating the cover (12) to the closed position.

3. The apparatus (10) of claim 1 or 2 wherein the arm (14) comprises a cam follower (26).

4. The apparatus (10) of claim 1, 2 or 3 further comprising a guide (30) engaged to the cover (12) for guiding the transition path of the cover (12).

5. The apparatus (10) of claim 4 wherein a cover boss (34) projects from the cover (12) and is engaged in a guide slot (32) provided in the guide (30).

6. The apparatus (10) of claim 5 wherein the guide slot (32) includes three sections to form a non-circular transition path.

7. The apparatus (10) of any one of claims 4 to 6 wherein the link member (16) comprises a first end pivotably connected to the cover (12) and a second end pivotably connected to the guide (30).

8. The apparatus (10) of claim 7 wherein the link member (16) is coupled to a flange (42) extending from the arm (14).

9. The apparatus (10) of claim 8 wherein a link boss (44) projects from the link member (16) and is engaged in a flange slot (46) provided in the flange (42).

10. The apparatus (10) of claim 9 wherein the flange slot (46) is arc shaped to effect rotation of the cover (12).

11. The apparatus (10) of claim 8 or 9 wherein the flange slot (46) is positioned between the first and second pivotably connected ends of the link member (16).

12. A worktool comprising the apparatus (10) of any one of the preceding claims.

13. A method of actuating a contamination cover apparatus (10) for a worktool, comprising the steps of:
arranging a cover (12) to be moveable between an open position and a closed position; and
rotating an arm (14) for actuating the cover (12) between the open and closed positions, wherein the arm (14) is coupled to the cover (12) through a link member (16) for transforming the rotational movement of the arm (14) to the opening movement of the cover (12).

14. The method of claim 13 wherein the rotation of the arm (14) correspondingly effects a rotation of the link member (16).

15. The method of claim 14 wherein the rotation of the arm (14) effects a rotation of the cover (12).
